(19) Europäisches Patentamt
European Patent Office
Office européen des brevets

(11) EP 4 580 002 A1

(12) **EUROPEAN PATENT APPLICATION**
published in accordance with Art. 153(4) EPC

(43) Date of publication:
02.07.2025 Bulletin 2025/27

(21) Application number: 22959259.7

(22) Date of filing: 23.09.2022

(51) International Patent Classification (IPC):
H02K 1/16 (2006.01)   H02K 3/04 (2006.01)
H02K 3/28 (2006.01)

(52) Cooperative Patent Classification (CPC):
H02K 1/16; H02K 3/04; H02K 3/28

(86) International application number:
PCT/CN2022/121109

(87) International publication number:
WO 2024/060257 (28.03.2024 Gazette 2024/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Intelligence
Technology
(Shanghai) Limited
Shanghai 201306 (CN)

(72) Inventor: WU, Kai
Shanghai 200120 (CN)

(74) Representative: Gong, Jinping
CocreateIP
Neumarkter Straße 21
81673 München (DE)

(54) **ELECTRICAL DEVICE, AND MOTOR AND STATOR THEREOF**

(57) Disclosed in the present application are an electrical device, and a motor and a stator thereof. The stator comprises a stator core and a stator winding; a plurality of winding slots are formed in the inner wall of the stator core; the stator winding comprises a plurality of conductors inserted into the winding slots; the stator winding comprises a first phase winding; the first phase winding comprises a first branch and a second branch; a first wire inlet end and a second wire inlet end are respectively connected to conductors on different layers in a same winding slot; a first wire outlet end and a second wire outlet end are respectively connected to conductors on different layers in a same winding slot. According to the technical solution provided by embodiments of the present application, the distance between the first wire inlet end and the second wire inlet end and the distance between the first wire outlet end and the second wire outlet end can be decreased, so that the connection of the two branches is realized, and the arrangement of the busbar and the implementation of winding processing processes are facilitated.

FIG. 1

## Description

TECHNICAL FIELD

The present application relates to the field of power devices and in particular to an electric device, a motor, and a stator thereof.

BACKGROUND

With the development of the new energy vehicle industry, the drive motors thereof also tend to be high-voltage, highspeed, integrated, platform-based, and miniaturized, while being miniaturized inevitably requires great improvement in the power density of the motor.

At present, how to reduce the voltage drop inside the motor and reduce the internal energy loss is one of the research targets in the field.

SUMMARY

In view of the above problems, the present application provides an electric device, a motor, and a stator thereof, which can reduce the voltage drop of the internal winding of the motor and reduce the internal energy loss of the motor.

In a first aspect, the present application provides a stator of a motor. The stator includes a stator core and a stator winding provided on the stator core. A plurality of winding slots are present on an inner wall of the stator core, and the stator winding includes a plurality of conductors inserted into the winding slots. The stator winding includes a first phase winding, and the first phase winding includes a first branch and a second branch. The first branch includes a first wire incoming end, a first wire outgoing end, and a plurality of conductors connected in series between the first wire incoming end and the first wire outgoing end. The second branch includes a second wire incoming end, a second wire outgoing end, and a plurality of conductors connected in series between the second wire incoming end and the second wire outgoing end. The first wire incoming end and the second wire incoming end are respectively connected to the conductors in different layers in the same winding slot. The first wire outgoing end and the second wire outgoing end are respectively connected to the conductors in different layers in the same winding slot.

In the technical solution of the embodiments of the present application, by respectively connecting the first wire incoming end and the second wire incoming end to the conductors in different layers in the same winding slot and respectively connecting the first wire outgoing end and the second wire outgoing end to the conductors in different layers in the same winding slot, the distance between the first wire incoming end and the second wire incoming end and the distance between the first wire outgoing end and the second wire outgoing end can be reduced, and the connection of two branches is facilitated, which is beneficial for the arrangement of the busbar and the implementation of the winding processing technology.

In some embodiments, the conductors in each of the winding slots are arranged as n layers, and n is a positive even number, along a direction from the slot bottom of the winding slot to the slot opening of the winding slot, the n layers of conductors are denoted as layer $L_1$, ..., layer $L_i$, ..., and layer $L_n$, and $1 \leq i \leq n$; the first wire incoming end and the second wire incoming end are respectively connected to the layer Li conductor and the layer $L_n$ conductor in the same winding slot, the first wire outgoing end and the second wire outgoing end are respectively connected to the layer $L_1$ conductor and the layer $L_n$ conductor in the same winding slot.

In the above embodiment, both the first wire incoming end and the first wire outgoing end are connected to a layer Li conductor, and the layer Li conductors are close to the outer end of the stator core along the radial direction. This facilitates the connection of the first wire incoming end and the first wire outgoing end to the external busbar. Both the second wire incoming end and the second wire outgoing end are connected to a layer $L_n$ conductor, and the layer $L_n$ conductors are close to the inner end of the stator core along the radial direction. This facilitates the connection of the second wire incoming end and the second wire outgoing end to the external busbar.

In some embodiments, both the first branch and the second branch include a plurality of insert members connected in series, and each of the insert members includes at least one conductor. The insert member may be provided with one conductor or a plurality of conductors. The conductors are arranged in the winding slots and feature simple structure, convenient production, and small occupied space, and the above technical solution can improve the power density of the motor.

In some embodiments, in the first branch, at least two conductors connected to each other are in the same layer along a direction from the first wire incoming end to the first wire outgoing end. The conductors connected in the same layer can balance the slot potential of the branches and reduce the circulating current loss between the branches.

In some embodiments, the first branch includes 2k conductors; along a direction from the first wire incoming end to the second wire incoming end, the first branch includes 2k conductors, which are denoted as $A_1$, $A_2$, ..., $A_k$, ..., $A_{2k-1}$, and $A_{2k}$; the $A_k{}^{th}$ conductor and the $A_{k+1}{}^{th}$ conductor are both layer $L_n$ conductors; the $A_1{}^{th}$ conductor to the $A_k{}^{th}$ conductor are sequentially connected from the layer Li to the layer $L_n$ along a first wave winding direction, the $A_{k+1}{}^{th}$ conductor to the $A_{2k}{}^{th}$ conductor are sequentially connected from the layer $L_n$ to the layer $L_1$ along a second wave winding direction, and the first wave winding direction is opposite to the second wave winding direction. Through the above arrangement mode, the voltage drop between the conductors of adjacent winding slots in the same phase winding can be reduced as much as possible.

In some embodiments, in the second branch, at least two conductors connected to each other are in the same layer along a direction from the second wire incoming end to the second wire outgoing end. The conductors connected in the same layer can balance the slot potential of the branches and reduce the circulating current loss between the branches.

In some embodiments, the second branch includes 2k conductors; along a direction from the second wire incoming end to the second wire incoming end, the second branch includes 2k conductors, which are denoted as $B_1$, $B_2$, ..., $B_k$, ..., $B_{2k-1}$, and $B_{2k}$; the $B_k{}^{th}$ conductor and the $B_{k+1}{}^{th}$ conductor are both layer Li conductors; the $B_1{}^{th}$ conductor to the $B_k{}^{th}$ conductor are sequentially connected from the layer $L_n$ to the layer Li along a second wave winding direction, the $B_{k+1}{}^{th}$ conductor to the $B_{2k}{}^{th}$ conductor are sequentially connected from the layer Li to the layer $L_n$ along a first wave winding direction. Through the above arrangement mode, the voltage drop between adjacent conductors in the same winding slot can be reduced as much as possible.

In some embodiments, the first phase winding includes 2p pole phase groups, where p is a positive integer; the plurality of conductors of the first branch are distributed in all the pole phase groups, and the plurality of conductors of the second branch are distributed in all the pole phase groups. The above technical solution can reduce the potential imbalance of branches caused by the eccentricity of the rotor and improve the energy conversion efficiency of the motor.

In some embodiments, in the winding slots distributed in the first branch and the second branch, the conductors of the first branch and the conductors of the second branch are alternately arranged along a direction from the slot bottom of the winding slot to the slot opening of the winding slot.

In some embodiments, two adjacent conductors in the same winding slot are denoted as a layer $A_x$ and a layer $B_y$, where $1 \leq x \leq y \leq k$, and $|y-x| \leq k$.

The larger the difference between the serial numbers of conductors, the larger the voltage difference between two conductors. If the difference between the serial numbers of two adjacent conductors in the same winding slot is too large, the voltage stress of the conductors in the winding slot will be too large. In the above technical solution, by allowing $|y-x| \leq k$, the voltage stress between conductors in the winding slot is reduced and the voltage drop in the slot is reduced.

In some embodiments, $12 \times N$ winding slots are present in the inner wall of the stator core, where N is a positive integer; the conductors of the first phase winding are distributed in $4 \times N$ winding slots; the stator winding further includes a second phase winding and a third phase winding, the second phase winding is distributed in $4 \times N$ winding slots, and the third phase winding is distributed in $4 \times N$ winding slots.

In a second aspect, the present application provides a motor including the stator in the above embodiments.

In a third aspect, the present application provides an electric device including the motor in the above embodiment.

The above description is only an overview of the technical solution of the present application. To more clearly understand the technical means of the present application to enable implementation in accordance with the content of the specification and to make the above and other purposes, features, and advantages of the present application more obvious and easy to understand, the detailed description of the present application is provided below.

BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative work.

FIG. 1 is a schematic structural diagram of a stator of a motor provided according to some embodiments of the present application;

FIG. 2 is a schematic cross-sectional diagram of a stator provided according to some embodiments of the present application;

FIG. 3 is a schematic structural diagram of an insert member of a stator provided according to some embodiments of the present application;

FIG. 4 is a schematic structural diagram of an insert member of a stator provided according to some other embodiments of the present application;

FIG. 5 is another schematic structural diagram of the stator shown in FIG. 1;

FIG. 6 is a schematic structural diagram of a first phase winding of a stator winding of a stator provided according to some embodiments of the present application;

FIG. 7 is a schematic diagram of a phase winding of a stator provided according to some embodiments of the present application;

FIG. 8 is an enlarged view of the block A in FIG. 2;

FIG. 9 is a schematic diagram of a phase winding of a stator provided according to some other embodiments of the present application;

FIG. 10 is a schematic diagram of three phase windings of a stator provided according to some embodiments of the present application;

FIG. 11 is a schematic connection diagram of phase windings of a stator winding of a stator provided according to some embodiments of the present application;

FIG. 12 is a schematic connection diagram of phase windings of a stator winding of a stator provided according to some other embodiments of the present application;

FIG. 13 is a schematic connection diagram of phase windings of a stator winding of a stator provided according to yet some embodiments of the present application;

FIG. 14 is a schematic connection diagram of phase windings of a stator winding of a stator provided according to still some embodiments of the present application.

The drawings are not necessarily to scale.

DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "link", "connect", and "attach" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to no less than two (including two).

At present, in the drive motor of a new energy vehicle, the stator is generally composed of a stator core and a conductor wound on the stator core, and the conductor is wound in a winding slot of the stator core to form an integral structure and thereby form a stator winding. To increase the slot fill factor, multiple layers of conductors may be provided in one winding slot. The stator winding typically includes a plurality of phase windings, each phase winding includes a plurality of branches, and the branches typically require connection by a busbar. The inventors have noted that in the related art, the distance between the wiring ends of branches is long, and thus the busbar connecting the branches occupies a large space and the size of the motor is relatively large.

Based on the above reasons, the inventors have done research and designed a stator of a motor. By respectively connecting the first wire incoming end and the second wire incoming end to the conductors in different layers in the same winding slot and respectively connecting the first wire outgoing end and the second wire outgoing end to the conductors in different layers in the same winding slot, the distance between the first wire incoming end and the second wire incoming end and the distance between the first wire outgoing end and the second wire outgoing end can be reduced, and the connection of two branches is facilitated, which is beneficial for the arrangement of the busbar and the implementation of the winding processing technology.

For the convenience of understanding, terms appearing in the present application will be explained as follows.

A stator refers to a stationary part in a motor, and its function is to generate a rotating magnetic field.

A rotor refers to a rotating component in a motor, and its function is to implement conversion between electric energy and mechanical energy.

A span refers to a distance over which two edges of the same element of the motor winding span on an armature surface and is usually represented by the number of winding slots formed on the stator core.

P refers to the number of magnetic pole pairs, which is also referred to as the number of pole pairs. Magnetic poles formed by energization of the motor windings appear as pairs of N and S poles. The total number of the magnetic poles is 2P.

A pole pitch refers to a distance occupied by each magnetic pole of the motor along a circumferential surface of an air gap. The pole pitch may be represented by the number of the winding slots of the stator core. Illustratively, the pole pitch is Z/2P, where Z is the total number of the winding slots of the stator core.

A pole phase group is formed by connecting in series a plurality of coils belonging to an in-phase winding at a pole pitch in an alternating current motor and is also referred to as a coil group. The current directions and the electromagnetic effects of coils of the pole phase group are the same, and the coils collectively generate a magnetic pole in the phase winding.

A phase winding refers to a set of windings consisting of one or more parallel branches connected in series and in parallel in a prescribed manner. Conductors in a phase winding typically span a plurality of pole pitches, and the coils are interconnected to form a whole.

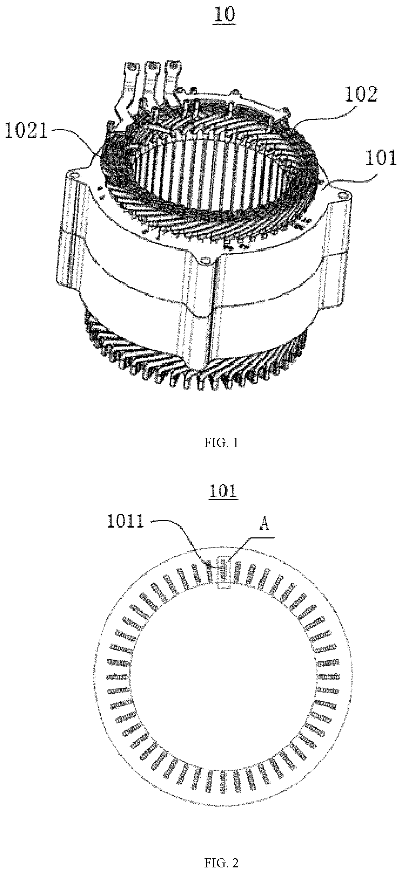

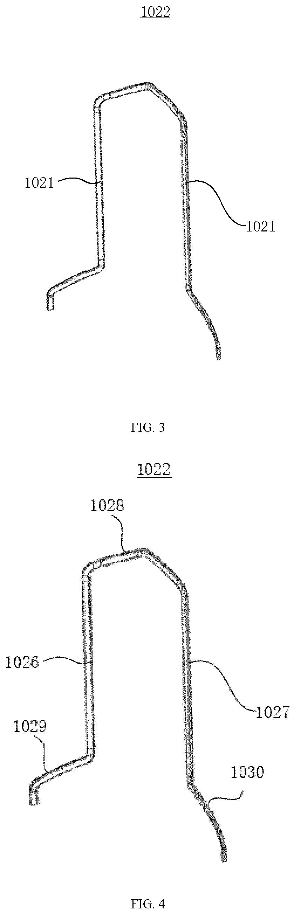

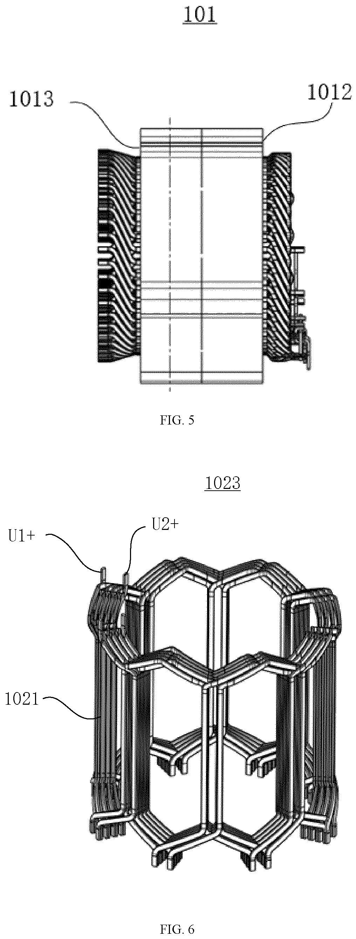

FIG. 1 is a schematic structural diagram of a stator of a motor provided according to some embodiments of the present application; FIG. 2 is a schematic cross-sectional diagram of a stator provided according to some embodiments of the present application; FIG. 3 is a schematic structural diagram of an insert member of a stator provided according to some embodiments of the present application; FIG. 4 is a schematic structural diagram of an insert member of a stator provided according to some other embodiments of the present application; FIG. 5 is another schematic structural diagram of the stator shown in FIG. 1; FIG. 6 is a schematic structural diagram of a first phase winding of a stator winding of a stator provided according to some embodiments of the present application.

As shown in FIG. 1 and FIG. 2, some embodiments of the present application provide a stator 10 of a motor. The stator 10 includes a stator core 101 and a stator winding 102. The stator winding 102 is provided on the stator core 101, a plurality of winding slots 1011 are present on the inner wall of the stator core 101, and the stator winding 102 includes a plurality of conductors 1021 inserted into the winding slots 1011.

The conductors 1021 are the portion of the stator winding 102 that is embedded in the stator core 101 for electromagnetic pole energy conversion.

The cross-section of the conductor 1021 may be circular, rectangular, or of other shapes. Illustratively, the conductor 1021 is a flat wire conductor.

In some embodiments, as shown in FIG. 3, the stator winding 102 includes a plurality of insert members 1022, and each insert member 1022 includes at least one conductor 1021. The portion of the insert member 1022 inserted into the winding slot 1011 may serve as the conductor 1021.

In some embodiments, referring to FIG. 4, each insert member 1022 includes a first insert part 1026, a second insert part 1027, and a connecting part 1028 connecting the first insert part 1026 and the second insert part 1027. The portion of the first insert part 1026 inserted into the winding slot 1011 may serve as a conductor 1021, and the portion of the second insert part 1027 inserted into the winding slot 1011 may serve as a conductor 1021.

In some embodiments, the insert member 1022 further includes a first extending part 1029 and a second extending part 1030. The first extending part 1029 extends from one end of the first insert part 1026 away from the first connecting part 1028, and the second extending part 1030 extends from one end of the second insert part 1027 away from the first connecting part 1028. The first extending part 1029 and the second extending part 1030 all extend out of the winding slot 1011 to facilitate connection with other insert members.

In some embodiments, as shown in FIG. 5, the stator core 101 has a first end 1012 and a second end 1013 along its own axial direction, and the winding slots 1011 extend from the first end 1012 to the second end 1013 to penetrate through the stator core 101. Along the axial direction of the stator core 101, the stator winding 102 may include an inserting end and a welding end. The inserting end of the stator winding 102 may be located at the first end 1012 of the stator core 101, and the welding end of the stator winding 102 may be located at the second end 1013 of the stator core 101. When the insert member 1022 is applied for winding, the insert member 1022 may be inserted into the winding slots 1011 through the first end 1012 and extend out of the winding slots 1011 through the second end 1013. The connecting part 1028 may be located at the first end 1012 of the stator core 101.

Illustratively, the insert member 1022 is a hairpin coil. Before being inserted into the winding slots 1011, the insert member 1022 may include two linear sides. The two linear sides are inserted into the winding slots 1011 through the first end 1012, and the portions of the two linear sides accommodated in the winding slots 1011 form the first insert part 1026 and the second insert part 1027, respectively. With further reference to FIG. 4, the portions of the two linear sides extending out through the second end 1013 form the first extending part 1029 and the second extending part 1030, respectively.

The first extending part 1029 and the second extending part 1030 are both provided at the welding end of the stator winding 102. After the insert member 1022 is inserted into the stator core 101, the first extending part 1029 and the second extending part 1030 may be bent, such that the first extending part 1029 and the second extending part 1030 can be welded to other insert members 1022.

The plurality of winding slots 1011 are arranged along the circumferential direction of the stator core 101, and two adjacent insert members 1022 may be directly connected or indirectly connected via other conductive structures. Illustratively, a conductive strip may be provided at the second end 1013 of the stator core 101, and two ends of the conductive strip are respectively welded to two adjacent insert members 1022 to connect the two adjacent insert members 1022.

In some embodiments of the present application, the insert member 1022 may be a full-pitch coil, and the span of the full-pitch coil equals to the pole pitch of the stator 10. The full-pitch coil typically spans M winding slots 1011. Illustratively, M = 6.

In some embodiments, the plurality of winding slots 1011 are uniformly arranged along the circumferential direction of the inner wall of the stator core 101. In other words, the plurality of winding slots 1011 are arranged equidistantly in the circumferential direction. When the insert member 1022 is designed, the span of the insert member 1022 may be determined according to the number of slots, thereby reducing the line type of the insert member 1022 and simplifying the line insertion process.

In some embodiments, the winding slots 1011 extend along the axial direction of the stator core 101 and penetrate through the stator core 101 along the axial direction of the stator core 101. According to this embodiment, the bending of the insert member 1022 can be reduced during the insertion of the insert member 1022 into the winding slots 1011, and the difficulty in assembling can be reduced.

In some embodiments, the number of the winding slots 1011 is 12×N, where N is a positive integer. Illustratively, the span of the first insert part 1026 and the second insert part 1027 is six winding slots 1011.

In some embodiments, the first insert part 1026 and the second insert part 1027 are each used as the conductor 1021 in the corresponding winding slot 1011.

The conductors 1021 in each winding slot 1011 are arranged as a plurality of layers. The plurality of layers of conductors 1021 are sequentially distributed along a direction from the slot bottom of the winding slot 1011 to the slot opening of the winding slot 1011. Optionally, the plurality of layers of conductors 1021 are stacked along the radial direction of the stator core 101.

The first insert part 1026 and the second insert part 1027 of the insert member 1022 are two conductors 1021 of the insert member 1022. The conductor 1021 is an effective side of the insert member 1022 and is the portion that is embedded in the stator core 101 for electromagnetic pole energy conversion. Providing a plurality of layers of conductors 1021 can improve the energy conversion efficiency of the electromagnetic poles.

In some embodiments, the two conductors 1021 of the insert member 1022 are embedded in the two winding slots 1011, respectively. The plurality of layers of conductors 1021 in each winding slot 1011 belong to a plurality of insert members 1022, respectively. The slot opening of the winding slot 1011 is present on the inner wall of the stator core 101 facing the rotor. The slot bottom of the winding slot 1011 is the bottom wall of the winding slot 1011 opposite to the slot opening.

In some embodiments, the cross-section of the conductor 1021 may be any one or more of rectangular, oval, racetrack-like, etc. The above structure can improve the slot fill factor of the stator core 101.

In some embodiments, the stator winding 102 includes a plurality of phase windings. Each phase winding includes at least one branch, and each branch includes a plurality of insert members 1022 connected in series. The number of the phase windings may be 2, 3, 4, or 5. Of course, the number of the phase windings may also be greater than 5. The stator 10 of the embodiments of the present application is suitable for motors with different phase number and can adapt to different voltage and power ranges.

In some embodiments, the stator winding 102 may include three phase windings, that is, a first phase winding 1023, a second phase winding, and a third phase winding. Illustratively, the first phase winding 1023 is a U-phase winding, the second phase winding is a V-phase winding, and the third phase winding is a W-phase winding.

Each phase winding may include only one branch, or may include a plurality of branches. The branch of the phase winding may also be referred to as a parallel branch. The number of the branches of the phase winding may be any integer to expand the designed use range of the winding and adapt to different voltage and power ranges. Illustratively, the phase winding in the embodiments of the present application includes a first branch U1 and a second branch U2.

In some embodiments, both the first branch U1 and the second branch U2 may include a plurality of insert members 1022. The plurality of insert members 1022 of the first branch U1 are connected in series, and the plurality of insert members 1022 of the second branch U2 are connected in series. The number of the insert members 1022 of the branch is not limited in this embodiment. The number of the insert members 1022 of the branch can be freely adjusted as required to expand the designed use range of the winding and adapt to different voltage and power ranges.

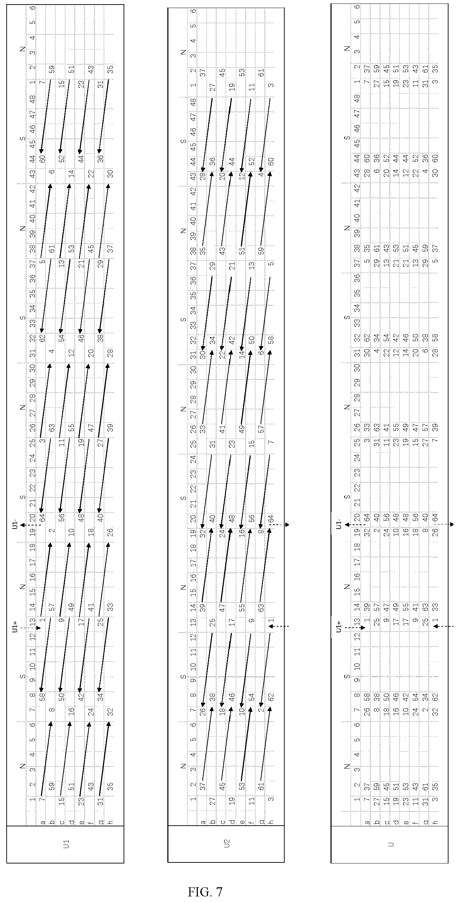

FIG. 6 is a schematic structural diagram of a phase winding of a stator provided according to some embodiments of the present application; FIG. 7 is a schematic structural diagram of a first phase winding 1023 of a stator 10 provided according to some embodiments of the present application.

As shown in FIG. 7, in some embodiments, the stator winding 102 includes a first phase winding 1023. The first phase winding 1023 includes a first branch and a second branch, and the first branch includes a first wire incoming end, a first wire outgoing end, and a plurality of conductors 1021 connected in series between the first wire incoming end and the first wire outgoing end. The second branch includes a second wire incoming end, a second wire outgoing end, and a plurality of conductors connected in series between the second wire incoming end and the second wire outgoing end. The first wire incoming end and the second wire incoming end are respectively connected to the conductors 1021 in different layers in the same winding slot 1011; the first wire outgoing end and the second wire outgoing end are respectively connected to the conductors 1020 in different layers in the same winding slot 1011.

Illustratively, FIG. 7 shows a U-phase winding. The stator winding of the present application will be described in detail below by taking a U-phase winding as an example.

As shown in FIG. 7, the U-phase winding includes a plurality of branches, two of which serve as a first branch U1 and a second branch U2.

For ease of understanding, in FIG. 7, the first table shows the first branch U1, the second table shows the second branch U2, and the third table shows the U-phase winding.

One of the first wire incoming end and the first wire outgoing end is a positive electrode wiring end, and the other one is a negative electrode wiring end. The electric polarity of the second wire incoming end is the same as that of the first wire incoming end, and the electric polarity of the second wire outgoing end is the same as that of the first wire outgoing end.

Illustratively, a description will be provided below by taking the first wire incoming end and the second wire incoming end as positive electrode wiring ends and the first wire outgoing end and the second wire outgoing end as negative electrode wiring ends. Correspondingly, in FIG. 7, U1+ represents the first wire incoming end of the first branch U1, and U1- represents the first wire outgoing end of the first branch U1; U2+ represents the second wire incoming end of the second branch U2, and U2- represents the second wire outgoing end of the second branch U2.

In each table of FIG. 7, N and S represent two magnetic poles of the stator. Illustratively, the stator is provided with eight magnetic poles, i.e., four magnetic pole pairs.

The stator core is provided with a plurality of winding slots 1011, and the plurality of winding slots 1011 are represented by a row of numbers below the N-poles and S-poles. Illustratively, in FIG. 7, the stator core 101 is provided with 48 winding slots 1011. In FIG. 7, the 48 winding slots 1011 are represented by a row of numbers below the N-poles and S-poles, i.e., 1-48. Optionally, each magnetic pole corresponds to six winding slots 1011.

A plurality of layers of conductors 1021 are accommodated in each winding slot 1011. Illustratively, in FIG. 7, eight conductors 1021 are accommodated in each winding slot 1011. The eight conductors 1021 are located on layers a, b, c, d, e, f, g, and h, respectively.

The first branch U1 includes a plurality of conductors 1021 connected in series. Illustratively, in the first table of FIG. 7, the plurality of conductors of the first branch U1 are represented by serial numbers distributed throughout the table. For example, the first branch U1 includes 64 conductors, and the 64 conductors are represented by 64 serial numbers distributed in the table; the 64 conductors of the first branch U1 are sequentially connected according to the serial numbers; the first wire incoming end is connected to the first conductor, and the first wire outgoing end is connected to the 64th conductor.

The second branch U2 includes a plurality of conductors connected in series. Illustratively, in the second table of FIG. 7, the plurality of conductors of the second branch U2 are represented by serial numbers distributed throughout the table. For example, the second branch U2 includes 64 conductors, and the 64 conductors are represented by 64 serial numbers distributed in the table; the 64 conductors of the second branch U2 are sequentially connected according to the serial numbers; the second wire incoming end is connected to the first conductor, and the second wire outgoing end is connected to the 64th conductor.

In the embodiments of the present application, by respectively connecting the first wire incoming end and the second wire incoming end to the conductors in different layers in the same winding slot 1011 and respectively connecting the first wire outgoing end and the second wire outgoing end to the conductors in different layers in the same winding slot 1011, the distance between the first wire incoming end and the second wire incoming end and the distance between the first wire outgoing end and the second wire outgoing end can be reduced, and the connection of two branches is facilitated, which is beneficial for the arrangement of the busbar and the implementation of the winding processing technology.

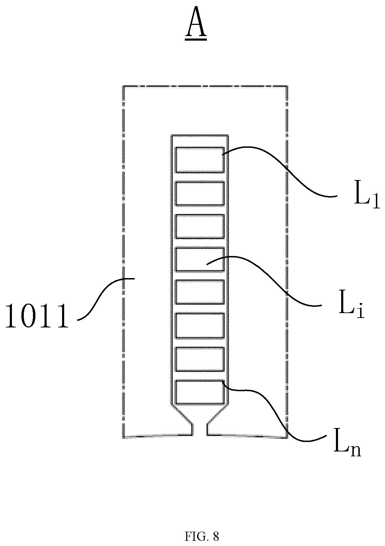

In some embodiments, as shown in FIG. 8, the conductors in each winding slot 1011 are arranged as n layers, where n is a positive even number. Along a direction from the slot bottom of the winding slot 1011 to the slot opening of the winding slot, the n layers of conductors are denoted as layer $L_1$, ..., layer $L_i$, ..., and layer $L_n$, where $1 \le i \le n$. The first wire incoming end and the second wire incoming end are respectively connected to the layer $L_i$ conductor and the layer $L_n$ conductor in the same winding slot 1011. The first wire outgoing end and the second wire outgoing end are respectively connected to the layer $L_i$ conductor and the layer $L_n$ conductor in the same winding slot 1011.

Illustratively, n may be 2, 4, 6, 8, 16, or 32. Optionally, as shown in FIG. 7, n is 8, and the layers $L_i$ to $L_8$ may also be denoted as layers a, b, c, d, e, f, g, and h, respectively.

In the above embodiment, both the first wire incoming end U1+ and the first wire outgoing end U1- are connected to a layer $L_1$ conductor, and the layer $L_i$ conductors are close to the outer end of the stator core 101 along the radial direction. This facilitates the connection of the first wire incoming end U1+ and the first wire outgoing end U1- to the external busbar. Both the second wire incoming end U2+ and the second wire outgoing end U2- are connected to a layer $L_n$ conductor, and the layer $L_n$ conductors are close to the inner end of the stator core along the radial direction. This facilitates the connection of the second wire incoming end and the second wire outgoing end to the external busbar.

In some embodiments of the present application, both the first branch U1 and the second branch U2 include a plurality of insert members 1022 connected in series, and each insert member 1022 includes at least one conductor. The insert member 1022 may be provided with one conductor or a plurality of conductors. The conductors are arranged in the winding slots 1011 and feature simple structure, convenient production, and small occupied space, and the above technical solution can improve the power density of the motor.

In some embodiments of the present application, in the first branch U1, at least two conductors connected to each other are in the same layer along a direction from the first wire incoming end to the first wire outgoing end. The conductors connected in the same layer can balance the slot potential of the branches and reduce the circulating current loss between the branches.

In an embodiment of the present application, with further reference to FIG. 7, the first branch includes 2k conductors; along a direction from the first wire incoming end to the second wire incoming end, the first branch includes 2k conductors, which are denoted as $A_1$, $A_2$, ..., $A_k$, ..., $A_{2k-1}$, and $A_{2k}$; the $A_k$th conductor and the $A_{k+1}$th conductor are both layer $L_n$ conductors; the $A_1$th conductor to the $A_k$th conductor are sequentially connected from the layer $L_i$ to the layer $L_n$ along a first wave winding direction, the $A_{k+1}$th conductor to the $A_{2k}$th conductor are sequentially connected from the layer $L_n$ to the layer $L_i$ along a second wave winding direction, and the first wave winding direction is opposite to the second wave winding direction.

Specifically, the k layers of conductors of the branch are connected in series; the conductors are sequentially connected from the layer $A_1$ to layer $A_k$ and then sequentially connected from the layer $A_k$ layer to layer $A_{2k}$. Illustratively, the layer $A_1$ is connected to the first wire incoming end, and the layer $A_{2k}$ is connected to the first wire outgoing end.

The first wave winding direction may be a clockwise direction, and the conductors are wound between two adjacent layers in an interleaving manner. Illustratively, a conductor spans G winding slots from the layer Li of the No. J slot along the clockwise direction and then winds to the layer $L_2$ of the No. J+G slot, and then a conductor spans G winding slots along the clockwise direction and then winds to the layer $L_1$ of the No. J+2G slot...; cycling is performed in such a way until a conductor returns to the No. J slot and winds to the layer $L_3$ of the No. J slot; then a conductor spans G winding slots from the layer $L_3$ of the No. J slot along the clockwise direction and then winds to the layer $L_4$ of the No. J+G slot, and then a conductor spans G winding slots along the clockwise direction and then winds to the layer $L_3$ of the No. J+2G slot...; cycling is performed in such a way until a conductor winds to the layer $L_n$ of the winding slot.

The second wave winding direction is opposite to the first wave winding direction and may be a counterclockwise direction to wind the conductors between two adjacent layers in an interleaving manner. Illustratively, a conductor spans G winding slots from the layer $L_n$ of the No. J slot along the clockwise direction and then winds to the layer $L_{n-1}$ of the No. J+G slot, and then a conductor spans G winding slots along the clockwise direction and then winds to the layer $L_n$ of the No. J+2G slot...; cycling is performed in such a way until a conductor returns to the No. J slot and winds to the layer $L_{n-2}$ of the No. J slot; then a conductor spans G winding slots from the layer $L_{n-2}$ of the No. J slot along the clockwise direction and then winds to the layer $L_{n-3}$ of the No. J+G slot, and then a conductor spans G winding slots along the clockwise direction and then winds to the layer $L_{n-2}$ of the No. J+2G slot...; cycling is performed in such a way until a conductor winds to the layer $L_1$ of the winding slot.

The inventors have noted that in the winding slot, the larger the difference between the serial numbers of adjacent conductors, the larger the voltage difference between the two conductors. If the difference between the serial numbers of two adjacent conductors in the same winding slot is too large, the voltage stress between the conductors in the winding slot will be too large, which affects the insulation reliability of the stator winding.

Through the above arrangement mode, the voltage drop between adjacent conductors in the same winding slot can be reduced as much as possible and the insulation reliability can be improved. In particular, this embodiment is not limited to only using the aforementioned insert member; other ways of winding the insert members may also be adopted in this embodiment as long as the difference between the serial numbers of the conductors meets the requirement for the range.

In some embodiments of the present application, in the second branch U2, at least two conductors 1021 connected to each other are in the same layer along a direction from the second wire incoming end to the second wire outgoing end. In the above technical solution, the conductors 1021 connected in the same layer can also balance the slot potential of the branches and reduce the circulating current loss between the branches.

In some embodiments of the present application, the second branch U2 includes 2k conductors; along a direction from the second wire incoming end to the second wire incoming end, the second branch includes 2k conductors, which are denoted as $B_1$, $B_2$, ..., $B_k$, ..., $B_{2k-1}$, and $B_{2k}$; the $B_k{}^{th}$ conductor and the $B_{k+1}{}^{th}$ conductor are both layer Li conductors; the $B_1{}^{th}$ conductor to the $B_k{}^{th}$ conductor are sequentially connected from the layer $L_n$ to the layer Li along a second wave winding direction, the $B_{k+1}{}^{th}$ conductor to the $B_{2k}{}^{th}$ conductor are sequentially connected from the layer $L_1$ to the layer $L_n$ along a first wave winding direction. Through the above arrangement mode, the voltage drop between adjacent conductors in the same winding slot can be reduced as much as possible.

In some embodiments of the present application, the first phase winding includes 2p pole phase groups, where p is a positive integer; the plurality of conductors 1021 of the first branch U1 are distributed in all the pole phase groups, and the plurality of conductors 1021 of the second branch U2 are distributed in all the pole phase groups. The above technical solution can reduce the potential imbalance of branches caused by the eccentricity of the rotor.

In some embodiments of the present application, in the winding slots distributed in the first branch U1 and the second branch U2, the conductors 1021 of the first branch U1 and the conductors 1021 of the second branch U2 are alternately arranged along a direction from the slot bottom of the winding slot to the slot opening of the winding slot.

In some embodiments of the present application, two adjacent conductors in the same winding slot are denoted as a layer $A_x$ and a layer $B_y$, where $1 \leq x \leq y \leq k$, and $|y-x| \leq k$.

The larger the difference between the serial numbers of conductors, the larger the voltage difference between two conductors. If the difference between the serial numbers of two adjacent conductors in the same winding slot 1011 is too large, the voltage stress of the conductors 1021 in the winding slot 1011 will be too large. In the above technical solution, by allowing $|y-x| \leq k$, the voltage stress between conductors in the winding slot 1011 is reduced and the insulation reliability is improved.

Illustratively, the first wire incoming end U1+ is connected to conductor No. 1 of the first branch U1, and the first wire outgoing end U1- is connected to conductor No. 64 of the first branch U1.

In some embodiments, conductors No. 1-32 of the first branch are connected in series sequentially. Conductors No. 1, 3, 5, and 7 are all layer-a conductors, and conductors No. 2, 4, 6, and 8 are all layer-b conductors. Conductors No. 9, 11, 13, and 15 are all layer-c conductors. Conductors No. 10, 12, 14, and 16 are all layer-d conductors. Conductors No. 17, 19, 21, and 23 are all layer-e conductors. Conductors No. 18, 20, 22, and 24 are all layer-f conductors. Conductors No. 25, 27, 29, and 31 are all layer-g conductors. Conductors No. 26, 28, 30, and 32 are all layer-h conductors.

In some embodiments, conductors No. 33-64 of the first branch are connected in series sequentially. Conductors No. 33, 35, 37, and 39 are all layer-g conductors, and conductors No. 34, 36, 38, and 40 are all layer-h conductors. Conductors No. 41, 43, 45, and 47 are all layer-f conductors. Conductors No. 42, 44, 46, and 48 are all layer-e conductors. Conductors No. 49, 51, 53, and 55 are all layer-d conductors. Conductors No. 50, 52, 54, and 56 are all layer-c conductors. Conductors No. 57, 59, 61, and 63 are all layer-b conductors. Conductors No. 58, 60, 62, and 64 are all layer-a conductors.

In some embodiments of the present application, the conductors No. 32 and 33 of the first branch are all layer-h conductors. The conductors 1021 connected in the same layer can also balance the slot potential of the branches and reduce the circulating current loss between the branches.

In some embodiments, the conductor No. 1 connected to the first wire incoming end U1+ is located in the No. 13 winding slot; the conductor No. 64 connected to the first wire outgoing end U1- is located in the No. 20 winding slot.

In some embodiments, the conductor No. 1 connected to the first wire incoming end U1+ and the conductor No. 64 connected to the first wire outgoing end U1- are all layer-a conductors. This embodiment is beneficial for the arrangement of the busbar and facilitates the connection of the first wire incoming end U1+ and the first wire outgoing end U1- to an external circuit.

In some embodiments, the stator includes eight magnetic poles, and correspondingly, the phase winding includes eight pole phase groups. Sixteen insert members of the branch U1 are distributed in the eight pole phase groups, such that the potential imbalance of the branch caused by the eccentricity of the rotor can be reduced.

In some embodiments, the span between the conductor connected to the first wire incoming end of the first branch U1 and the conductor connected to the second wire incoming end of the second branch U2 is less than or equal to the pole pitch. In the embodiments of the present application, the distance between the wire incoming ends of the two branches can be reduced, and the connection of the wire incoming ends of the two branches is facilitated, which is beneficial for the arrangement of the busbar and the implementation of the winding processing technology.

The second branch U2 includes 64 conductors. In FIG. 7, the 64 conductors are represented by 64 serial numbers distributed in the table. The 64 conductors are sequentially connected according to the serial numbers.

Illustratively, the positive electrode wiring end is the second wire incoming end, and the negative electrode wiring end is the second wire outgoing end. In FIG. 7, U2+ represents the second wire incoming end, and U2- represents the second wire outgoing end.

The second wire incoming end U2+ is connected to conductor No. 1 of the second branch U2, and the second wire outgoing end U2- is connected to conductor No. 64 of the second branch U2.

In some embodiments, conductors No. 1-32 of the second branch are connected in series sequentially. Conductors No. 1, 3, 5, and 7 are all layer-h conductors, and conductors No. 2, 4, 6, and 8 are all layer-g conductors. Conductors No. 9, 11, 13, and 15 are all layer-f conductors. Conductors No. 10, 12, 14, and 16 are all layer-e conductors. Conductors No. 17, 19, 21, and 23 are all layer-d conductors. Conductors No. 18, 20, 22, and 24 are all layer-c conductors. Conductors No. 25, 27, 29, and 31 are all layer-b conductors. Conductors No. 26, 28, 30, and 32 are all layer-a conductors.

In some embodiments, conductors No. 33-64 of the second branch are connected in series sequentially. Conductors No. 33, 35, 37, and 39 are all layer-a conductors, and conductors No. 34, 36, 38, and 40 are all layer-b conductors. Conductors No. 41, 43, 45, and 47 are all layer-c conductors. Conductors No. 42, 44, 46, and 48 are all layer-d conductors. Conductors No. 49, 51, 53, and 55 are all layer-e conductors. Conductors No. 50, 52, 54, and 56 are all layer-f conductors. Conductors No. 57, 59, 61, and 63 are all layer-g conductors. Conductors No. 58, 60, 62, and 64 are all layer-h conductors.

In some embodiments, the conductor connected to the first wire incoming end of the first branch U1 and the conductor 1021 connected to the second wire incoming end of the second branch U2 are provided in the same winding slot 1011. In the embodiments of the present application, the wire incoming ends of two branches are led out from the same winding slot 1011, such that the distance between the wire incoming ends of the two branches is further reduced, and the connection of the wire incoming ends of the two branches is facilitated, which is beneficial for the arrangement of the busbar and the implementation of the winding processing technology.

In the embodiments of the present application, the conductors No. 32 and 33 of the second branch U2 are all layer-a conductors. The conductors connected in the same layer can also balance the slot potential of the branches and reduce the circulating current loss between the branches.

In some embodiments, the conductor No. 1 connected to the second wire incoming end U2+ is located in the No. 13 winding slot; the conductor No. 64 connected to the second wire outgoing end U2- is located in the No. 20 winding slot.

In some embodiments, the conductor No. 1 connected to the second wire incoming end U2+ and the conductor No. 64 connected to the second wire outgoing end U2- are all layer-a conductors. This embodiment is beneficial for the arrangement of the busbar and facilitates the connection of the first wire incoming end U1+ and the first wire outgoing end U1- to an external circuit.

In some embodiments, the stator 10 includes eight magnetic poles, and correspondingly, the phase winding includes eight pole phase groups. Sixteen insert members of the second branch U2 are distributed in the eight pole phase groups, such that the potential imbalance of the branch caused by the eccentricity of the rotor can be reduced.

In some embodiments, the span between the conductor connected to the first wire incoming end of the first branch U1 and the conductor connected to the second wire incoming end of the second branch U2 is less than or equal to the pole pitch. In the embodiments of the present application, the distance between the wire incoming ends of the two branches can be reduced, and the connection of the wire incoming ends of the two branches is facilitated, which is beneficial for the arrangement of the busbar and the implementation of the winding processing technology.

In some embodiments, the plurality of branches of the phase winding may be connected in series or in parallel. Illustratively, the first branch U1 and the second branch U2 may be connected in series or in parallel.

As shown in FIG. 7, the conductor No. 1 of the first branch U1 is connected to the first wire incoming end U1+ of the first branch U1, and the conductor No. 1 of the second branch U2 is connected to the second wire outgoing end U2+ of the second branch U2. Optionally, the conductor No. 1 of the first branch U1 and the conductor No. 1 of the second branch U2 are provided in the same winding slot, i.e., the No. 13 winding slot. The first wire incoming ends of two branches are led out from the same winding slot 1011, such that the distance between the wire incoming ends of the two branches is further reduced, and the connection of the wire incoming ends of the two branches is facilitated, which is beneficial for the arrangement of the busbar and the implementation of the winding processing technology.

In some embodiments, the conductor No. 1 of the first branch U1 and the conductor No. 64 of the first branch U1 are all layer-a conductors, and the conductor No. 1 of the second branch U2 and the conductor No. 64 of the second branch U1 are all layer-h conductors. This embodiment is beneficial for the arrangement of the busbar and facilitates the connection of the wire incoming ends (U1+, U2 +) and the wire outgoing ends (U1-, U2-) to an external circuit.

The U-phase winding shown in FIG. 7 can balance the slot potential of each branch, reduce the circulating current loss between the branches, reduce the unbalance of electromotive force of the branches caused by the eccentricity of the rotor, and reduce the voltage stress of the conductors in the slots, and meanwhile is beneficial for the arrangement of the busbar and the implementation of the winding processing technology. In the embodiments of the present application, the maximum voltage drop between adjacent conductors in the same winding slot can be reduced to 0.47 $U_{ph}$ ($U_{ph}$ is the phase voltage). Compared with a traditional stator winding, in the embodiments of the present application, the voltage drop in the winding slot can be reduced by 51.5%.

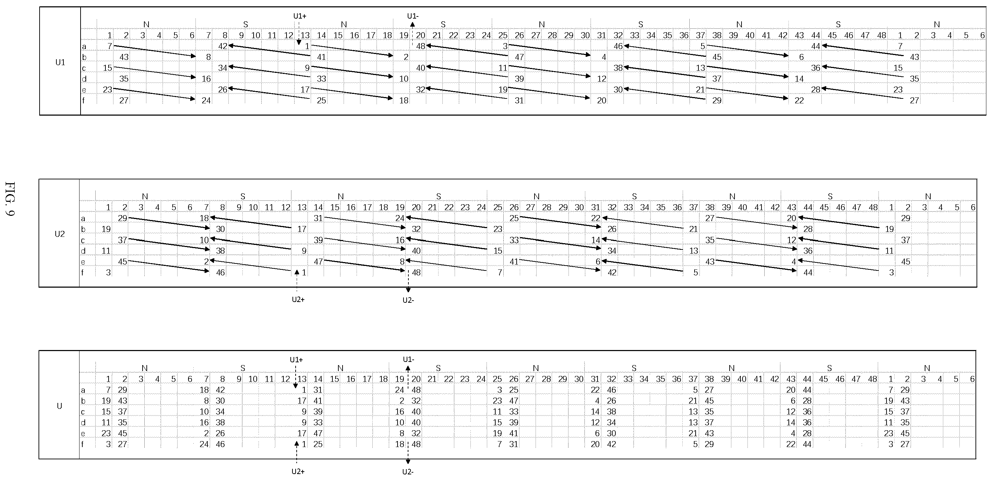

FIG. 9 is a schematic diagram of a phase winding of a stator provided according to some embodiments of the present application. Illustratively, FIG. 9 shows a U-phase winding.

As shown in FIG. 9, in some embodiments, six conductors are accommodated in each winding slot. The eight conductors are located on layers a, b, c, d, e, and f, respectively.

In FIG. 9, U1+ represents the first wire incoming end of the first branch U1, and U1- represents the first wire outgoing end of the first branch U1; U2+ represents the second wire incoming end of the second branch U2, and U2- represents the second wire outgoing end of the second branch U2.

N and S represent two magnetic poles of the stator. Illustratively, the stator is provided with eight magnetic poles, i.e., four magnetic pole pairs. The stator core is provided with 48 winding slots. In FIG. 9, the 48 winding slots are represented by a row of numbers below the N-poles and S-poles, i.e., 1-48. Each magnetic pole corresponds to six winding slots.

Illustratively, the positive electrode wiring end is the first wire incoming end, and the negative electrode wiring end is the first wire outgoing end. In FIG. 8, U1+ represents the first wire incoming end, and U1- represents the first wire outgoing end.

The first wire incoming end U1+ is connected to conductor No. 1, and the first wire outgoing end U1- is connected to conductor No. 48.

In some embodiments, conductors No. 1-24 of the first branch are connected in series sequentially. Conductors No. 1, 3, 5, and 7 are all layer-a conductors, and conductors No. 2, 4, 6, and 8 are all layer-b conductors. Conductors No. 9, 11, 13, and 15 are all layer-c conductors. Conductors No. 10, 12, 14, and 16 are all layer-d conductors. Conductors No. 17, 19, 21, and 23 are all layer-e conductors. Conductors No. 18, 20, 22, and 24 are all layer-f conductors.

In some embodiments, conductors No. 25-48 of the first branch U1 are connected in series sequentially. Conductors No. 25, 27, 29, and 31 are all layer-f conductors. Conductors No. 26, 28, 30, and 32 are all layer-e conductors. Conductors No. 33, 35, 37, and 39 are all layer-d conductors. Conductors No. 34, 36, 38, and 40 are all layer-c conductors. Conductors No. 41, 43, 45, and 47 are all layer-b conductors. Conductors No. 42, 44, 46, and 48 are all layer-a conductors.

In the embodiments of the present application, the conductors No. 24 and 25 of the first branch U1 are all layer-f conductors. The two insert members 1022 can be welded at a regular interval without cross-layer welding, thereby simplifying the welding process. The conductors connected in the same layer can also balance the slot potential of the branches and reduce the circulating current loss between the branches.

In some embodiments, the conductor No. 1 connected to the first wire incoming end U1+ is located in the No. 13 winding slot; the conductor No. 48 connected to the first wire outgoing end U1- is located in the No. 20 winding slot.

In some embodiments, the conductor No. 1 connected to the first wire incoming end U1+ and the conductor No. 48 connected to the first wire outgoing end U1- are all layer-a conductors. This embodiment is beneficial for the arrangement of the busbar and facilitates the connection of the first wire incoming end U1+ and the first wire outgoing end U1- to an external circuit.

In some embodiments, the stator includes eight magnetic poles, and correspondingly, the phase winding includes eight pole phase groups. The plurality of insert members 1022 of the branch U1 are distributed in the eight pole phase groups, such that the potential imbalance of the branch caused by the eccentricity of the rotor can be reduced.

In some embodiments, the span between the conductor connected to the first wire incoming end of the first branch U1 and the conductor connected to the second wire incoming end of the second branch U2 is less than or equal to the pole pitch. In the embodiments of the present application, the distance between the wire incoming ends of the two branches can be reduced, and the connection of the wire incoming ends of the two branches is facilitated, which is beneficial for the arrangement of the busbar and the implementation of the winding processing technology.

Illustratively, as shown in FIG. 9, in the second branch U2, the positive electrode wiring end is the second wire incoming end, and the negative electrode wiring end is the second wire outgoing end. In FIG. 9, U2+ represents the second wire incoming end, and U2- represents the second wire outgoing end.

The second wire incoming end U2+ is connected to conductor No. 1, and the second wire outgoing end U2- is connected to conductor No. 48.

In some embodiments, as shown in FIG. 9, conductors No. 1-24 of the second branch U2 are connected in series sequentially. Conductors No. 1, 3, 5, and 7 are all layer-f conductors, and conductors No. 2, 4, 6, and 8 are all layer-e conductors. Conductors No. 9, 11, 13, and 15 are all layer-d conductors. Conductors No. 10, 12, 14, and 16 are all layer-c conductors. Conductors No. 17, 19, 21, and 23 are all layer-b conductors. Conductors No. 18, 20, 22, and 24 are all layer-a conductors.

In some embodiments, conductors No. 25-48 of the second branch are connected in series sequentially.

Conductors No. 25, 27, 29, and 31 are all layer-h conductors. Conductors No. 26, 28, 30, and 32 are all layer-e conductors. Conductors No. 33, 35, 37, and 39 are all layer-d conductors. Conductors No. 34, 36, 38, and 40 are all layer-c conductors. Conductors No. 41, 43, 45, and 47 are all layer-b conductors. Conductors No. 42, 44, 46, and 48 are all layer-a conductors.

In some embodiments, the conductor connected to the first wire incoming end of the first branch U1 and the conductor connected to the second wire incoming end of the second branch U2 are provided in the same winding slot 1011. In the embodiments of the present application, the wire incoming ends of two branches are led out from the same winding slot 1011, such that the distance between the wire incoming ends of the two branches is further reduced, and the connection of the wire incoming ends of the two branches is facilitated, which is beneficial for the arrangement of the busbar and the implementation of the winding processing technology.

In the embodiments of the present application, the conductors No. 24 and 25 of the second branch are all layer-a conductors. The conductors connected in the same layer can also balance the slot potential of the branches and reduce the circulating current loss between the branches.

In some embodiments, the conductor No. 1 connected to the second wire incoming end U2+ is located in the No. 13 winding slot; the conductor No. 48 connected to the second wire outgoing end U2- is located in the No. 20 winding slot.

In some embodiments, the conductor No. 1 connected to the second wire incoming end U2+ and the conductor No. 48 connected to the second wire outgoing end U2- are all layer-a conductors. This embodiment is beneficial for the arrangement of the busbar and facilitates the connection of the first wire incoming end U1+ and the first wire outgoing end U1- to an external circuit.

In some embodiments, the stator 10 includes eight magnetic poles, and correspondingly, the phase winding includes eight pole phase groups. The plurality of insert members 1022 of the second branch U2 are distributed in the eight pole phase groups, such that the potential imbalance of the branch caused by the eccentricity of the rotor can be reduced.

In some embodiments, the span between the conductor connected to the first wire incoming end of the first branch U1 and the conductor connected to the second wire incoming end of the second branch U2 is less than or equal to the pole pitch. In the embodiments of the present application, the distance between the wire incoming ends of the two branches can be reduced, and the connection of the wire incoming ends of the two branches is facilitated, which is beneficial for the arrangement of the busbar and the implementation of the winding processing technology. The 24 insert members 1022 of the second branch U2 are also distributed in eight pole phase groups. In this embodiment, the potential imbalance of the branch caused by the eccentricity of the rotor can be reduced.

In some embodiments, the plurality of branches of the phase winding may be connected in series or in parallel. Illustratively, the first branch U1 and the second branch U2 may be connected in series or in parallel.

As shown in FIG. 9, the conductor No. 1 of the first branch U1 is connected to the first wire incoming end U1+ of the first branch U1, and the conductor No. 1 of the second branch U2 is connected to the second wire outgoing end U2+ of the second branch U2. Optionally, the conductor No. 1 of the first branch U1 and the conductor No. 1 of the second branch U2 are provided in the same winding slot 1011, i.e., the No. 13 winding slot. The wire incoming ends of two branches are led out from the same winding slot 1011, such that the distance between the wire incoming ends of the two branches is further reduced, and the connection of the wire incoming ends of the two branches is facilitated, which is beneficial for the arrangement of the busbar and the implementation of the winding processing technology.

In some embodiments, the conductor No. 1 of the first branch U1 and the conductor No. 64 of the first branch U1 are all layer-a conductors, and the conductor No. 1 of the second branch U2 and the conductor No. 48 of the second branch U1 are all layer-f conductors. This embodiment is beneficial for the arrangement of the busbar and facilitates the connection of the two wire incoming ends (U1+, U2 +) and the two wire outgoing ends (U1-, U2-) to an external circuit.

The U-phase winding shown in FIG. 98 can balance the slot potential of each branch, reduce the circulating current loss between the branches, reduce the unbalance of electromotive force of the branches caused by the eccentricity of the rotor, and reduce the voltage stress of the conductors in the slots, and meanwhile is beneficial for the arrangement of the busbar and the implementation of the winding processing technology. In the embodiments of the present application, the maximum voltage drop between adjacent conductors in the same winding slot can be reduced to 0.46 $U_{ph}$ ($U_{ph}$ is the phase voltage).

The embodiments of the present application are suitable for windings with different layers and are beneficial for widening the voltage range and the power range of the windings.

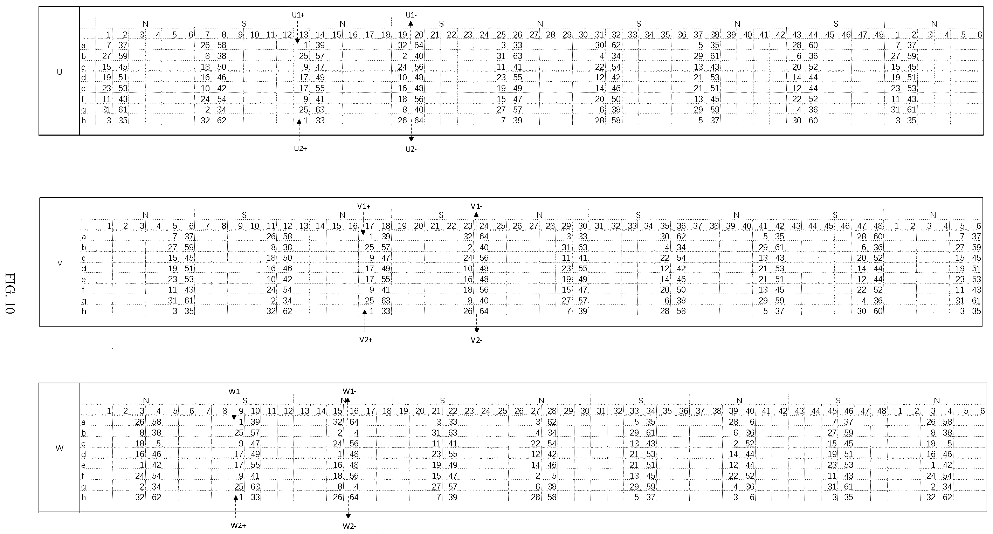

FIG. 10 is a schematic diagram of three phase windings of a stator provided according to some embodiments of the present application. FIG. 10 shows the U-phase winding, the V-phase winding, and the W-phase winding of the stator winding. For ease of understanding, in FIG. 10, the three-phase windings of the stator winding are split and respectively shown in three tables.

In some embodiments, all the wire incoming ends in the plurality of phase windings are connected to conductors in different winding slots. In this embodiment, the distance between the wire incoming ends can be increased to reduce the voltage stress among phases.

In some embodiments, all the wire outgoing ends in the plurality of phase windings are connected to conductors in different winding slots. In this embodiment, the distance between the wire outgoing ends can be increased to reduce the voltage stress among phases.

In some embodiments, all the wire incoming ends and all the wire outgoing ends are connected to conductors in different winding slots. In this embodiment, the distance between the wire incoming ends and the distance between the wire outgoing ends can be increased to reduce the voltage stress among phases.

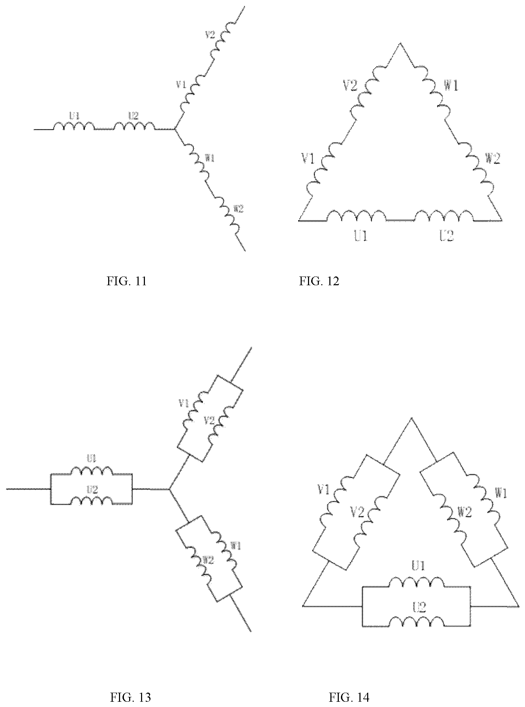

Illustratively, as shown in FIG. 10, the U-phase winding includes a first branch U1 and a second branch U2. U1+ represents the first wire incoming end of the first branch U1, and U1- represents the first wire outgoing end of the first branch U1; U2+ represents the second wire incoming end of the second branch U2, and U2- represents the second wire outgoing end of the second branch U2. Optionally, the U-phase winding of FIG. 10 may be obtained by combining the first branch U1 and the second branch U2 shown in FIG. 11.

The V-phase winding includes a first branch V1 and a second branch V2. V1+ represents the first wire incoming end of the first branch V1, and V1- represents the first wire outgoing end of the first branch V1; V2+ represents the second wire incoming end of the second branch V2, and V2- represents the second wire outgoing end of the second branch V2.

The W-phase winding includes a first branch W1 and a second branch W2. W1+ represents the first wire incoming end of the first branch W1, and W1- represents the first wire outgoing end of the first branch W1; W2+ represents the second wire incoming end of the second branch W2, and W2- represents the second wire outgoing end of the second branch W2.

In some embodiments, the 12 conductors connected to the wiring ends U1+, U1-, U2+, U2-, V1+, V1-, V2+, V2-, W1+, W1-, W2+, and W2- are respectively provided in 12 winding slots.

In some embodiments, the six conductors connected to the wiring ends U1+, U1-, U2+, U2-, V1+, and V1- are all layer-a conductors. The above wiring ends are all close to the outer end of the stator core along the radial direction, which can facilitate the welding.

In some embodiments, the 12 conductors connected to the wiring ends U1+, U1-, U2+, U2-, V1+, V1-, V2+, V2-, W1+, W1-, W2+, and W2-are distributed in adjacent three magnetic poles, which is beneficial for the arrangement of the busbar.

As shown in FIG. 11, in some embodiments, the stator winding includes three phase windings, i.e., a U-phase winding, a V-phase winding, and a W-phase winding. Illustratively, the three phase windings are connected as a triangle.

The U-phase winding includes a first branch U1 and a second branch U2 connected in series. The V-phase winding includes a first branch V1 and a second branch V2 connected in series. The W-phase winding includes a first branch W1 and a second branch W2 connected in series.

In the embodiments of the present application, 12×N winding slots 1011 are present in the inner wall of the stator core 101, where N is a positive integer. The conductors of the first phase winding are distributed in 4×N winding slots. The second phase winding is distributed in 4×N winding slots, and the third phase winding is distributed in 4×N winding slots.

As shown in FIG. 12, in some embodiments, the stator winding includes three phase windings, i.e., a U-phase winding, a V-phase winding, and a W-phase winding. N = 4, and the U-phase winding, the V-phase winding, and the W-phase winding are each distributed in 16 winding slots 1011.

Specifically, the U-phase winding is distributed in No. 1-2, No. 7-8, No. 13-14, No. 19-20, No. 25-26, No. 31-32, No. 37-38, and No. 43-44 slots. The V-phase winding is distributed in No. 5-6, No. 11-12, No. 17-18, No. 23-24, No. 29-30, No. 35-36, No. 41-42, and No. 47-48 slots. The W-phase winding is distributed in No. 3-4, No. 9-10, No. 15-16, No. 21-22, No. 27-28, No. 33-34, No. 39-40, and No. 45-46 slots.

The above arrangement mode can reduce the circulating current loss among the three phase windings and improve the conversion efficiency of the motor.

The U-phase winding includes a first branch U1 and a second branch U2 connected in series. The V-phase winding includes a first branch V1 and a second branch V2 connected in series. The W-phase winding includes a first branch W1 and a second branch W2 connected in series.

FIG. 13 is a schematic connection diagram of phase windings of a stator winding of a stator provided according to some other embodiments of the present application.

As shown in FIG. 13, in some embodiments, the stator winding includes three phase windings, i.e., a U-phase winding, a V-phase winding, and a W-phase winding. Illustratively, the three phase windings are connected as a triangle.

The U-phase winding includes a first branch U1 and a second branch U2 connected in parallel. The V-phase winding includes a first branch V1 and a second branch V2 connected in parallel. The W-phase winding includes a first branch W1 and a second branch W2 connected in parallel.

FIG. 14 is a schematic connection diagram of phase windings of a stator winding of a stator provided according to still some embodiments of the present application.

As shown in FIG. 14, in some embodiments, the stator winding includes three phase windings, i.e., a U-phase winding, a V-phase winding, and a W-phase winding. Illustratively, the three phase windings are connected as a star. The U-phase winding includes a first branch U1 and a second branch U2 connected in parallel. The V-phase winding includes a first branch V1 and a second branch V2 connected in parallel. The W-phase winding includes a first branch W1 and a second branch W2 connected in parallel.

Referring to the different stator windings shown in FIG. 11 to FIG. 14, by changing the connection mode of the phase windings and the connection mode of the branches of the phase windings, the number of serial turns per phase of the stator winding can be adjusted to adapt to application scenarios involving different voltage and power ranges.

The embodiments of the present application further provide a motor, which includes the stator provided by any one of the aforementioned embodiments. Illustratively, the motor further includes a rotor, and the rotor is provided in a space formed by the enclosing of the inner wall of the stator core.

The motor of the embodiments of the present application may be a generator or an electromotor.

The embodiments of the present application further provide an electric device, which includes the motor provided by any one of the aforementioned embodiments.

In some embodiments, the electric device includes a powertrain, which includes a reducer and the motor described above. The motor is in transmission connection to the reducer. Specifically, the drive shaft of the motor and the input shaft of the reducer can be in transmission connection through a transmission member such as a coupling, such that the driving force is output from the motor to the reducer.

The embodiments of the present application further provide a vehicle, which includes the powertrain described above. The powertrain described above is provided in the vehicle and provides operation power for the vehicle. Specifically, in this embodiment, the vehicle may be specifically, e.g., a new energy vehicle that is driven by electric energy. The new energy vehicle may be a hybrid electric vehicle, a pure electric vehicle, a fuel cell electric vehicle, or the like, or may be a vehicle using a high-efficiency energy storage device such as a super capacitor, a flywheel battery, or a flywheel energy storage device as the source of electric energy.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features, however, these modifications or substitutions do not make the essence of the corresponding technical solutions deviate from the spirit and scope of the technical solutions in the embodiments of the present application.

It should be noted that unless conflicting, the embodiments and features of the embodiments in the present application may be combined with each other.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features, however, these modifications or substitutions do not make the essence of the corresponding technical solutions deviate from the spirit and scope of the technical solutions in the embodiments of the present application.

**Claims**

1. A stator of a motor, comprising a stator core and a stator winding provided on the stator core, wherein a plurality of winding slots are present on an inner wall of the stator core, and the stator winding comprises a plurality of conductors inserted into the winding slots;

   the stator winding comprises a first phase winding, and the first phase winding comprises a first branch and a second branch; the first branch comprises a first wire incoming end, a first wire outgoing end, and a plurality of conductors connected in series between the first wire incoming end and the first wire outgoing end, and the second branch comprises a second wire incoming end, a second wire outgoing end, and a plurality of conductors connected in series between the second wire incoming end and the second wire outgoing end;
   the first wire incoming end and the second wire incoming end are respectively connected to the conductors in different layers in a same winding slot; the first wire outgoing end and the second wire outgoing end are respectively connected to the conductors in different layers in a same winding slot.

2. The stator according to claim 1, wherein the conductors in each of the winding slots are arranged as n layers, and n is a positive even number; along a direction from a slot bottom of the winding slot to a slot opening of the winding slot, the n layers of conductors are denoted as layer $L_1$, ..., layer $L_i$, ..., and layer $L_n$, and $1 \leq i \leq n$;
   the first wire incoming end and the second wire incoming end are respectively connected to a layer $L_1$ conductor and a layer $L_n$ conductor in a same winding slot; the first wire outgoing end and the second wire outgoing end are respectively connected to a layer Li conductor and a layer $L_n$ conductor in a same winding slot.

**3.** The stator according to claim 2, wherein both the first branch and the second branch comprise a plurality of insert members connected in series, and each of the insert members comprises at least one conductor.

**4.** The stator according to any one of claims 1 to 3, wherein in the first branch, at least two conductors connected to each other are in a same layer along a direction from the first wire incoming end to the first wire outgoing end.

**5.** The stator according to claim 4, wherein the first branch comprises 2k conductors; along a direction from the first wire incoming end to the second wire incoming end, the first branch comprises 2k conductors denoted as $A_1$, $A_2$, ..., $A_k$, ..., $A_{2k-1}$, and $A_{2k}$;

the $A_k{}^{th}$ conductor and the $A_{k+1}{}^{th}$ conductor are both layer-$L_n$ conductors; the $A_1{}^{th}$ conductor to the $A_k{}^{th}$ conductor are sequentially connected from the layer Li to the layer $L_n$ along a first wave winding direction, the $A_{k+1}{}^{th}$ conductor to the $A_{2k}{}^{th}$ conductor are sequentially connected from the layer $L_n$ to the layer $L_1$ along a second wave winding direction, and the first wave winding direction is opposite to the second wave winding direction.

**6.** The stator according to claim 5, wherein in the second branch, at least two conductors connected to each other are in a same layer along a direction from the second wire incoming end to the second wire outgoing end.

**7.** The stator according to claim 6, wherein the second branch comprises 2k conductors; along a direction from the second wire incoming end to the second wire incoming end, the second branch comprises 2k conductors denoted as $B_1$, $B_2$, ..., $B_k$, ..., $B_{2k-1}$, and $B_{2k}$;

the $B_k{}^{th}$ conductor and the $B_{k+1}{}^{th}$ conductor are both layer-$L_1$ conductors; the $B_1{}^{th}$ conductor to the $B_k{}^{th}$ conductor are sequentially connected from the layer $L_n$ to the layer Li along the second wave winding direction, and the $B_{k+1}{}^{th}$ conductor to the $B_{2k}{}^{th}$ conductor are sequentially connected from the layer Li to the layer $L_n$ along the first wave winding direction.

**8.** The stator according to claim 7, wherein the first phase winding comprises 2p pole phase groups, and p is a positive integer; the plurality of conductors of the first branch are distributed in all the pole phase groups, and the plurality of conductors of the second branch are distributed in all the pole phase groups.

**9.** The stator according to claim 7 or 8, wherein in the winding slots distributed in the first branch and the second branch, the conductors of the first branch and the conductors of the second branch are alternately arranged along the direction from the slot bottom of the winding slot to the slot opening of the winding slot.

**10.** The stator according to claim 7 or 8, wherein two adjacent conductors in a same winding slot are denoted as a layer $A_x$ and a layer $B_y$, and $1 \leq x \leq y \leq k$, wherein

$$|y\text{-}x| \leq k.$$

**11.** The stator according to any one of claims 1 to 10, wherein $12 \times N$ winding slots are present in the inner wall of the stator core, and N is a positive integer; the conductors of the first phase winding are distributed in $4 \times N$ winding slots; the stator winding further comprises a second phase winding and a third phase winding, the second phase winding is distributed in $4 \times N$ winding slots, and the third phase winding is distributed in $4 \times N$ winding slots.

**12.** A motor, comprising the stator according to any one of claims 1 to 11.

**13.** An electric device, comprising the motor according to claim 12.

10

FIG. 1

101

FIG. 2

1022

FIG. 3

1022

FIG. 4

101

1013                                    1012

FIG. 5

1023

U1+        U2+

1021

FIG. 6

FIG. 7

$\underline{A}$

1011

$L_1$

$L_i$

$L_n$

FIG. 8

FIG. 9

FIG. 10

FIG. 11

FIG. 12

FIG. 13

FIG. 14

## INTERNATIONAL SEARCH REPORT

| International application No. |
|---|
| **PCT/CN2022/121109** |

### A. CLASSIFICATION OF SUBJECT MATTER

H02K 1/16(2006.01)i; H02K 3/04(2006.01)i; H02K 3/28(2006.01)i

According to International Patent Classification (IPC) or to both national classification and IPC

### B. FIELDS SEARCHED

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

VEN; CNABS; CNTXT; CNKI; CNPAT: 定子, 扁, 发卡, 线, 导体, 绕组, 进线, 引入, 输入, 出线, 引出, 输出, 同, 槽, stator, flat, pin, hairpin, wire, conductor, winding, coil, input, output, same, slot

### C. DOCUMENTS CONSIDERED TO BE RELEVANT

| Category* | Citation of document, with indication, where appropriate, of the relevant passages | Relevant to claim No. |
|---|---|---|
| X | CN 114204708 A (HUAWEI DIGITAL POWER TECHNOLOGIES CO., LTD.) 18 March 2022 (2022-03-18)<br>description, paragraphs 0049-0059 and 0075-0080, and figures 1-5 and 11-12 | 1-13 |
| A | CN 114825723 A (ZHEJIANG ZEEKR INTELLIGENT TECHNOLOGY CO., LTD. et al.) 29 July 2022 (2022-07-29)<br>entire document | 1-13 |
| A | CN 115001182 A (CHONGQING TSINGSHAN INDUSTRIAL CO., LTD.) 02 September 2022 (2022-09-02)<br>entire document | 1-13 |
| A | CN 114552811 A (ZHEJIANG ZEEKR INTELLIGENT TECHNOLOGY CO., LTD. et al.) 27 May 2022 (2022-05-27)<br>entire document | 1-13 |
| A | CN 114583863 A (HUAWEI DIGITAL POWER TECHNOLOGIES CO., LTD.) 03 June 2022 (2022-06-03)<br>entire document | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2022** | **27 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/121109** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2021194307 A1 (VALEO SIEMENS EAUTOMOTIVE GERMANY GMBH) 24 June 2021 (2021-06-24)<br>    entire document | 1-13 |

Form PCT/ISA/210 (second sheet) (January 2015)

**INTERNATIONAL SEARCH REPORT**
Information on patent family members

International application No.

**PCT/CN2022/121109**

| Patent document cited in search report | | | Publication date (day/month/year) | Patent family member(s) | | | Publication date (day/month/year) |
|---|---|---|---|---|---|---|---|
| CN | 114204708 | A | 18 March 2022 | None | | | |
| CN | 114825723 | A | 29 July 2022 | None | | | |
| CN | 115001182 | A | 02 September 2022 | None | | | |
| CN | 114552811 | A | 27 May 2022 | None | | | |
| CN | 114583863 | A | 03 June 2022 | None | | | |
| US | 2021194307 | A1 | 24 June 2021 | JP | 2021100370 | A | 01 July 2021 |
| | | | | EP | 3840184 | A1 | 23 June 2021 |
| | | | | DE | 102019135426 | A1 | 24 June 2021 |
| | | | | KR | 20210080236 | A | 30 June 2021 |
| | | | | CN | 113014018 | A | 22 June 2021 |

Form PCT/ISA/210 (patent family annex) (January 2015)